Europäisches Patentamt

European Patent Office

Office européen des brevets

(19)

(11) Numéro de publication: **0 192 006**
**B1**

(12) **FASCICULE DE BREVET EUROPÉEN**

(45) Date de publication du fascicule du brevet:
**03.02.88**

(51) Int. Cl.⁴: **B 60 N 1/02,** B 60 N 1/10

(21) Numéro de dépôt: **85402513.7**

(22) Date de dépôt: **17.12.85**

(54) **Siège de véhicule automobile.**

(30) Priorité: **28.12.84 FR 8420175**

(43) Date de publication de la demande:
**27.08.86 Bulletin 86/35**

(45) Mention de la délivrance du brevet:
**03.02.88 Bulletin 88/5**

(84) Etats contractants désignés:
**DE GB IT**

(56) Documents cité:
**EP-A-0 028 564**
**EP-A-0 029 377**
**DE-A-1 703 221**
**FR-A-1 448 282**
**FR-A-2 120 277**
**FR-A-2 129 678**
**FR-A-2 402 431**
**US-A-3 313 571**
**US-A-3 357 736**
**US-A-3 582 133**
**US-A-3 819 232**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Miclot, André Louis, 12, Place des Myrtilles, F-78310 Maurepas- Village (FR)**

(74) Mandataire: **Boivin, Claude, 9, rue Edouard-Charton, F-78000 Versailles (FR)**

LIBER, STOCKHOLM 1988

EP 0 192 006 B1

## Description

La présente invention concerne un siège de véhicule comportant un châssis qui est monté coulissant longitudinalement par rapport à la structure du véhicule et supporte une nacelle en un matériau plastique moulé ou estampé.

Elle a pour objet un siège de ce genre dont les possibilités d'utilisation et de réglage sont particulièrement grandes.

Le siège selon l'invention est caractérisé en ce que la nacelle est montée basculante par rapport au châssis autour d'un axe horizontal dont elle peut être désolidarisée et comporte une coque d'assise montée pivotante à l'une de ses extrémités par rapport à la nacelle, et en ce qu'il est muni de moyens pour immobiliser dans la position désirée d'une part la nacelle par rapport au châssis et d'autre part la coque d'assise par rapport à la nacelle.

Dans un mode de réalisation avantageux de l'invention, le châssis comporte un axe horizontal monté pivotant, sur l'une des extrémités duquel est fixé un levier de commande extérieur à la nacelle et qui est solidaire d'un levier portant un pion interposé entre deux cliquets ou leviers montés pivotants librement sur ledit axe, l'un de ces cliquets ou leviers étant relié à une pièce de verrouillage propre à maintenir l'axe de basculement de la nacelle, alors que l'autre levier ou cliquet porte un toc propre à s'engager dans un secteur denté de la nacelle afin de bloquer son basculement, des moyens élastiques agissant sur ces leviers et tendant à les maintenir dans des positions dans lesquelles la nacelle est solidarisée au châssis par son axe de basculement et est empêchée de basculer par rapport à ce châssis.

Un même levier permet ainsi soit de séparer la nacelle du châssis si on le fait pivoter dans un sens, soit de permettre son basculement si on le fait pivoter dans le sens opposé.

On a décrit ci-après, à titre d'exemple non limitatif, un mode de réalisation du siège selon l'invention, avec reference aux dessins annexés dans lesquels :

La Figure 1 est une vue latérale du siège;

La Figure 2 en est une vue latérale opposée;

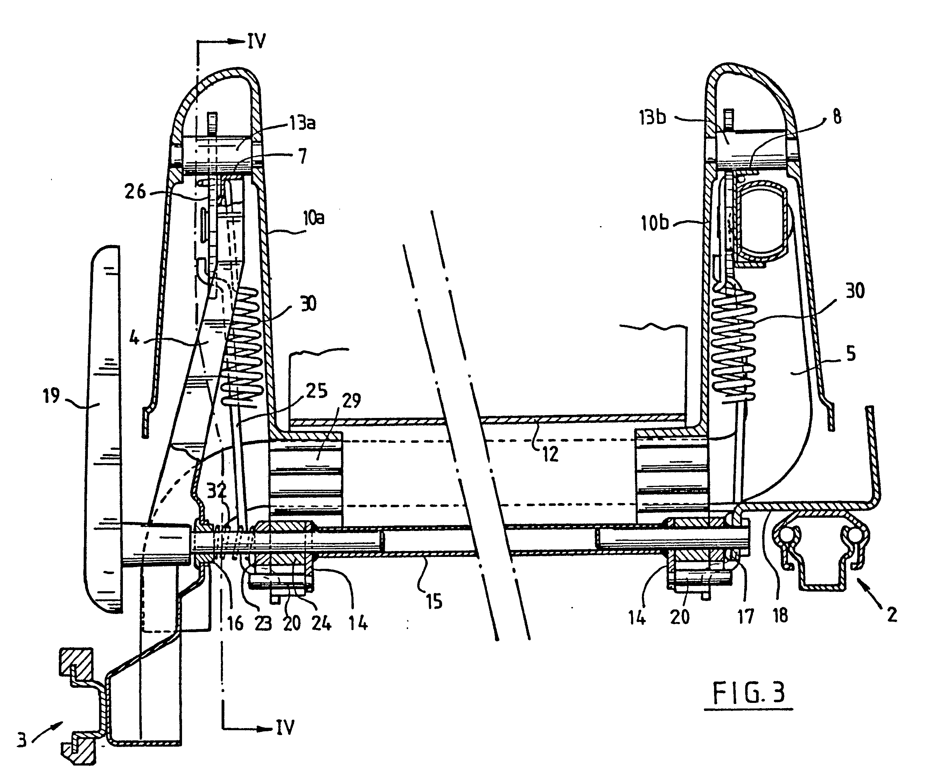

La Figure 3 en est une coupe transversale suivant III-III de la Figure 1;

La Figure 4 en est une coupe longitudinale suivant IV-IV de la Figure 3;

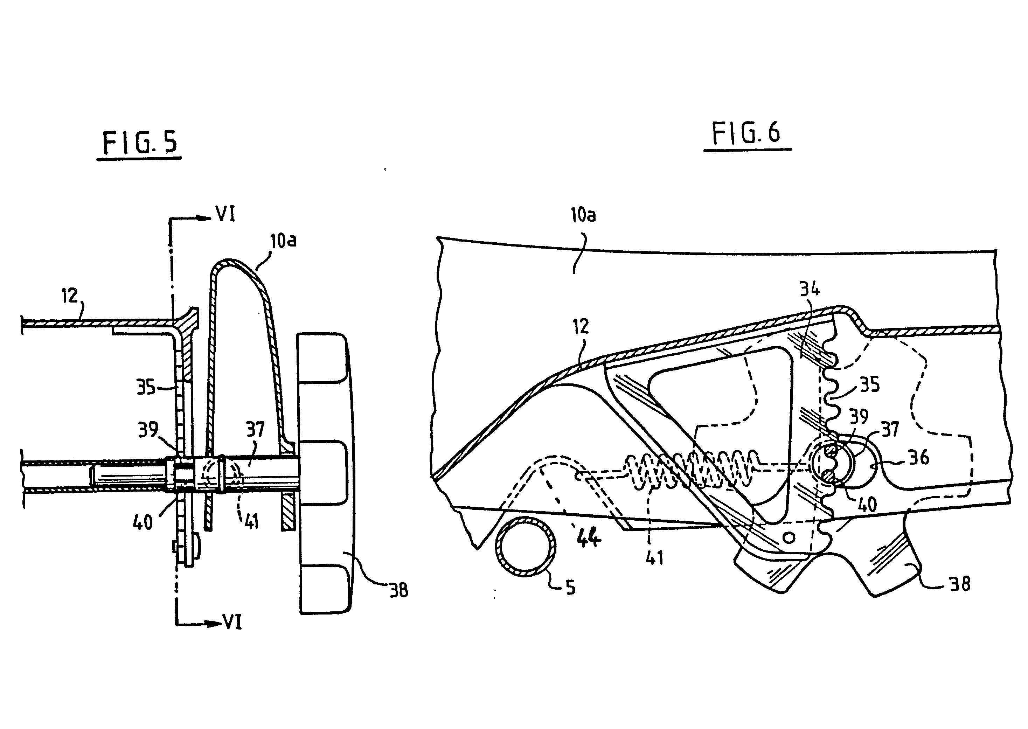

La Figure 5 en est une demi-coupe transversale suivant V-V de la Figure 1;

La Figure 6 en est une coupe longitudinale suivant VI-VI de la Figure 5.

Tel qu'il est represente au dessin, le siege selon l'invention comprend un châssis qui est désigné au dessin par la référence 1 et peut coulisser longitudinalement par rapport au châssis du véhicule, du côté intérieur par l'intermédiaire de glissières à billes 2 et du côté extérieur grâce à des patins de glissement 3.

Le châssis 1 est constitué par un flasque porte-mécanisme 4 qui est disposé du côté extérieur du siàge et est relié par un tube plié 5 à une plaquette 6 disposée du côté intérieur. Le flasque 4 et la plaquette 6 présentent à leur partie supérieure un évidement respectivement 7 ou 8 formant palier, les deux évidements étant disposés à la même hauteur et, plus précisément coaxiaux tous deux à un même axe transversal perpendiculaire au flasque et à la plaquette.

Le siège comprend également une nacelle 9 en matière plastique moulée. Celle-ci est formée de deux flancs creux 10a et 10b réunis l'un à l'autre par une partie dorsale 11, et d'une coque d'assise 12. Chacun des flancs 10a et 10b est creux et porte un axe transversal 13a ou 13b, les deux axes étant colinéaires. La nacelle 9 peut être montée sur le châssis 1 de façon que ses flancs 10a et 10b enveloppent respectivement le flasque 4 et la plaquette 6, les axes 13a et 13b reposant dans les paliers 7 et 8.

Un mécanisme permettant de verrouiller les axes ou pivots 13a et 13b dans leurs paliers 7 et 8 et de régler l'inclinaison de la nacelle 9 par rapport au châssis 1 est disposé dans chacun des flancs 10a et 10b.

Ce mécanisme comporte un levier 14 qui est solidaire d'un axe transversal 15 s'étendant sur toute la largeur du siège. Cet axe est monté pivotant dans des paliers 16 et 17 portés respectivement par le flasque 4 et par un fer 18 soudé sous le tube 5 et portant l'élément mobile de la glissière 2. L'axe 15 porte un levier de manoeuvre 19 à son extrémité située du côté extérieur du siège.

Le levier 14 porte un pion 20 qui est engagé entre deux becs 21 et 22 de deux leviers 23 et 24 superposés et montés pivotants librement sur l'axe 15. Le levier 23 est relié par une bielle 25 à un pène de verrouillage 26 qui est monté pivotant autour d'un axe 27 par rapport au flanc 10a ou 10b et permet de maintenir l'axe 13a ou 13b respectivement dans son palier 7 ou 8. De son côté, le levier 24 forme cliquet et présente un toc 28 qui peut s'engager entre deux dents d'une denture 29 prévue sur la face intérieure de chacun des flancs 10a et 10b. Un ressort 30 relie le cliquet 24 au pène 26. L'extrémité de ce ressort accrochée au pène 26 traverse une boutonnière 31 ménagée dans le flasque 4. Un ressort 32 est interposé entre le palier 16 et le levier 23; ce ressort maintient les leviers 23 et 24 en appui contre le levier 14 correspondant.

Au repos le ressort 30 maintient le pène 26 en position de verrouillage et le bec 28 du levier 24 engagé entre deux dents de la denture 29.

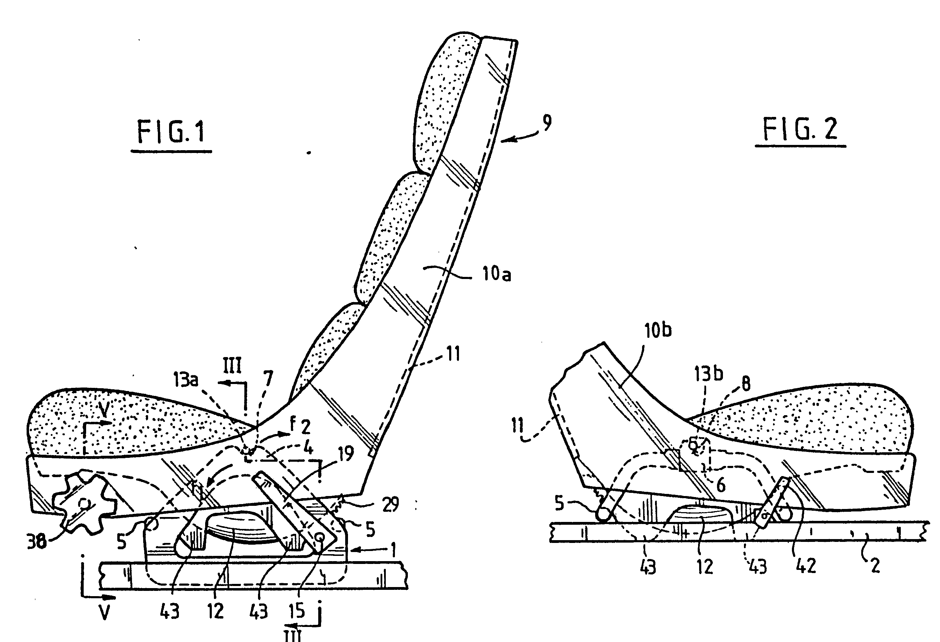

Si l'on fait pivoter le levier 19 dans le sens indiqué par la flèche $f_1$ à la Figure 1, ce levier entraîne les leviers 23 par l'intermédiaire des pions 20 des leviers 14. Les bielles 25 font pivoter les pènes 26 qui libèrent les axes 13a et 13b de leurs paliers 7 et 8. On peut alors extraire la nacelle 9 du châssis 1. A ce moment, le mécanisme de verrouillage est fou et peut prendre toute position d'équilibre compatible avec le débattement dans le boutonnière 31, de l'extrémité du ressort accrochée au pène 26.

Si l'on fait pivoter le levier 19, dans le sens contraire indiqué par la flèche $f_2$, les pions 20 entraînent les leviers 24 dont les tocs 28 se dégagent des dentures 29. On peut alors faire basculer la nacelle autour de l'axe des paliers 7 et 8 et modifier la position du dièdre d'assise; lorsqu'on relâche ensuite le levier 19, les ressorts 30 assurent le réengagement des tocs 28 dans les dentures 29 et, par suite, l'immobilisation de la nacelle dans la nouvelle position choisie.

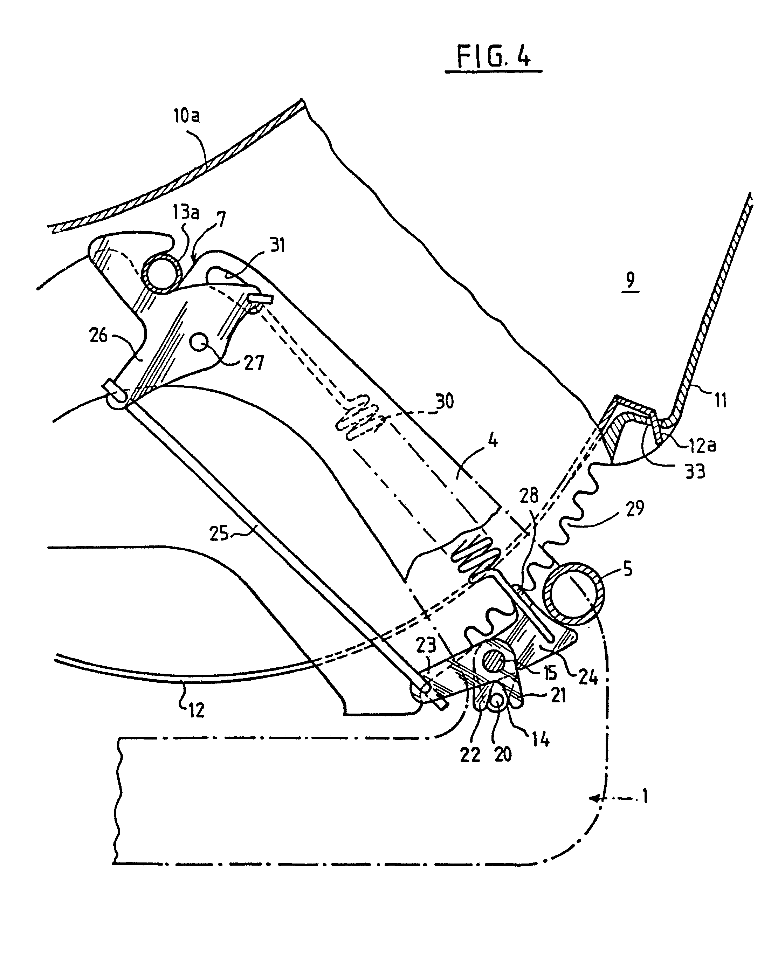

L'extrémité arrière 12a de la coque d'assise 12 est repliée et engagée avec jeu dans une fente 33 ménagée dans la partie dorsale 11 de la nacelle 9 (Figure 4). A son extrémité avant, elle porte de chaque côté un secteur 34 comportant une denture 35. Chacun des flancs 10a et 10b de la nacelle porte un palier oblong 36. Un axe 37 s'étend sur toute la largeur de la nacelle et repose dans les paliers oblongs 36. Cet axe est solidaire d'une molette de manoeuvre 38 disposée à l'extrémité de la nacelle, et comporte deux paires de pions 39 et 40 disposées chacune en regard de chaque denture 35, les deux pions 39 et 40 d'une même paire étant écartés l'un de l'autre d'une distance égale au pas de ces dentures 35. Deux ressorts 41 attelés à l'axe 37 et à la nacelle et disposés chacun dans l'un des flancs 10a et 10b, maintiennent les pions 39 et 40 dans les dentures 35.

En faisant pivoter la molette 38 à l'encontre des ressorts 41, on déplace l'un des pions de chaque paire dans la denture 35 correspondante, ce qui fait pivoter la coque d'assise 12 autour de l'axe de la fente 33.

La référence 42 désigne un levier qui permet, de manière connue, d'immobiliser le châssis 1 sur ses glissières. Chacun des flancs 10a et 10b est muni à sa partie inférieure, de pieds de support 43.

Il ressort de la description qui précède que, si on le désire, on peut désolidariser la nacelle 9 du châssis sur lequel elle est normalement fixée. La nacelle peut alors être utilisée comme siège à l'extérieur du véhicule en reposant sur les pieds 43. Lorsque la nacelle est en place dans le véhicule, on peut à la fois régler sa position longitudinale en agissant sur le levier 42, sa position angulaire en agissant sur le levier 19, et l'inclinaison de l'assise par manoeuvre de la molette 38.

Lorsque la nacelle est dans sa position d'inclinaison maximale, elle dégage l'accès aux places arrière dans le cas d'un véhicule à deux portes.

Elle peut aussi, étant déverouillée de son châssis au moyen d'une action sur le levier 19, venir reposer sur la branche avant du tube 5 du châssis 1 et, utilisant comme axe de rotation ce tube qui se loge dans des encoches 44 prévues dans les flancs au-delà des pieds de support 43 avant, pivoter vers l'avant d'une amplitude maximale et s'appuyer sur le volant pour le siège du conducteur ou sur la planche de bord pour le siège du passager. Cette disposition permet un dégagement optimal aux places arrière et, de ce fait, facilite le transport imprévu et/ou le chargement d'objets encombrants et difficilement logeables. En rabattant la nacelle après usage elle reprend sa place automatiquement sur ses pivots, le verrouillage se faisant naturellement par déplacement du pène de fermeture 26, à l'aide du levier 19.

**Revendications**

1. Siège de véhicule automobile comportant un châssis (1) qui est monté coulissant longitudinalement par rapport à la structure du véhicule et supporte une nacelle (9) en un matériau plastique moulé ou estampé, caractérisé en ce que la nacelle (9) est montée basculante par rapport au châssis (1) autour d'un axe horizontal (13a, 13b) dont elle peut être désolidarisée et comporte une coque d'assise (12) montée pivotante à l'une de ses extrémités (12a) par rapport à la nacelle, et en ce qu'il est muni de moyens (figure 4) pour immobiliser dans la position désirée d'une part la nacelle (9) par rapport au châssis (1) et d'autre part la coque d'assise (12) par rapport à la nacelle (9) .

2. Siège de véhicule selon la revendication 1, caractérisé en ce que la nacelle porte deux pivots coaxiaux(13a et 13b) engagés dans des paliers du châssis qui sont ouverts sur une partie de leur périphérie afin de permettre de dégager les pivots des paliers.

3. Siège de véhicule selon la revendication 1 ou 2, caractérisé en ce que le châssis (1) comporte un axe horizontal (15) monté pivotant, sur l'une des extrémités duquel est fixé un levier de commande (19) extérieur à la nacelle et qui est solidaire d'un levier (14) portant un pion (20) interposé entre deux cliquets ou leviers (23 et 24) montés pivotants librement sur ledit axe (15), l'un de ces cliquets ou leviers étant relié à un pène de verrouillage (26) propre à maintenir l'axe de basculement de la nacelle (9), alors que l'autre levier ou cliquet porte un toc (28) propre à s'engager dans un secteur denté (29) de la nacelle afin de bloquer son basculement, des moyens élastiques (30) agissant sur ces leviers et tendant à les maintenir dans des positions dans lesquelles la nacelle est solidarisée au châssis par son axe de basculement et est empêchée de basculer par rapport à ce châssis.

4. Siège de véhicule selon la revendication 3, caractérisé en ce que les moyens élastiques sont constitués par un ressort reliant le pène de verrouillage (26) au levier (24) portant le toc (28).

5. Siège de véhicule selon la revendication 3 ou 4, caractérisé en ce qu'il comporte deux mécanismes de verrouillage et de basculement identiques disposés chacun d'un côté du siège et logés dans des flancs creux de la nacelle, l'axe (15) étant commun aux deux mécanismes.

6. Siège de véhicule selon l'une quelconque des revendications précédentes, caractérisé en ce que la coque d'assise (12) présente à l'une de ses extrémités un bord replié (12a) qui est engagé avec jeu dans une fente dorsale (33) de la nacelle.

7. Siège de véhicule selon l'une quelconque des revendications précédentes, caractérisé en ce que les moyens pour immobiliser la coque d'assise par rapport à la nacelle sont constitués par deux mécanismes disposés chacun d'un côté du siège et commandés par un même axe (37) portant une molette (38) et mobile longitudinalement dans deux paliers oblongs (36) de la nacelle, chacun des mécanismes comportant un secteur denté (34) solidaire de la coque d'assise (12) et dans lequel deux pions (39 et 40) solidaires de l'axe (37) sont engagés sous l'action de moyens élastiques (41).

**Patentansprüche**

1. Kraftfahrzeugsitz mit einem Grundgestell (1), das in Bezug auf den Fahrzeugaufbau in Längsrichtung verschiebbar angeordnet ist und eine Sitzgondel (9) aus einem gegossenen oder gepreßten Kunststoffmaterial trägt, dadurch gekennzeichnet, daß die Sitzgondel (9) um eine horizontale Achse (13a, 13b) kippbar am Grundgestell (1), von dem sie abkoppelbar ist, angeordnet ist und eine Sitzschale (12) aufweist, die mit einem ihrer Enden (12a) schwenkbar an der Sitzgondel befestigt ist und daß Mittel (Fig. 4) vorgesehen sind, un einerseits die Sitzgondel (9) in Bezug auf das Grundgestell (1) und andererseits die Sitzschale (12) in Bezug auf die Sitzgondel (9) in der gewünschten Position festzulegen.

2. Kraftfahrzeugsitz nach Anspruch 1, dadurch gekennzeichnet, daß an der Sitzgondel zwei Drehzapfen (13a und 13b) koaxial angeordnet sind, die in Lagern des Grundgestells gelagert sind, welche auf einem Teil ihres Umfangs offen sind, zum Ermöglichen eines Herausnehmens der Drehzapfen aus den Lagern.

3. Kraftfahrzeugsitz nach Anspruch 1 oder 2, dadurch gekennzeichnet, daß das Grundgestell (1) eine drehbar gelagerte horizontale Achse (15) aufweist, an der an einem ihrer Enden ein Steuerhebel (19) außarhalb der Sitzgondel befestigt ist und die kraftschlüssig mit einem Hebel verbunden ist, welcher einen Stift (20) trägt, der zwischen zwei Sperrklinken oder Hebeln (23 und 24) angeordnet ist, die frei drehbar auf der besagten Achse (15) angeordnet sind, wobei eine dieser Sperrklinken oder Hebel mit einem Sperriegel verbunden ist, der zum Festhalten der Kippachse der Sitzgondol (9) geeignet ist, während der andere Hebel oder die Sperrklinke einen Ansatz (28) trägt, der in ein Zahnsegment (29) der Sitzgondel eingreifen kann zum Blockieren ihres Kippens, wobei elastische Mittel (30) auf diese Hebel einwirken und das Bestreben haben, sie in Positionen festzuhalten, in denen die Sitzgondel über ihre Kippachse kraftschlüssig mit dem Grundgestell verbunden und in Bezug auf dieses Grundgestell am Kippen gehindert ist.

4. Kraftfahrzeugsitz nach Anspruch 3, dadurch gekennzeichnet, daß die elastischen Mittet durch eine Feder gebildet werden, die den Sperriegel (26) mit dem den Ansatz (28) tragenden Hebel (24) verbindet.

5. Kraftfahrzeugsitz nach den Ansprüchen 3 oder 4, dadurch gekennzeichnet, daß er zwei identische Verriegelungs- und Kippvorrichtungen aufweist, von denen jede an einer Seite des Sitzes angeordnet ist und die in den hohlen Flanken der Sitzgondel untergebracht sind, wobei die Achse (15) den beiden Vorrichtungen gemeinsam zugeordnet ist.

6. Kraftfahrzeugsitz nach einem der vorhergehenden Ansprüche, dadurch gekennzeichnet, daß die Sitzschale (12) an einem ihrer Enden einen umgebogenen Rand (12a) aufweist, der mit Spiel in einen Schlitz (33) an der Rückseite der Sitzgondel eingreift.

7. Kraftfahrzeugsitz nach einem der vorhergehenden Ansprüche, dadurch gekennzeichnet, daß die Mittel zum Festlegen der Sitzschale in Bezug auf das Grundgestell durch zwei Vorrichtungen gebildet werden, von denen jede an einer Seite des Sitzes angeordnet ist und die durch eine gemeinsame, einen Drehgriff (38) tragande Achse (37) angesteuert sind, die in Längsrichtung in zwei länglichen Lagern (36) der Sitzgondel bewegbar ist, wobei jede der beiden Vorrichtungen ein Zahnsegment (34) aufweist, das kraftschlüssig mit der Sitzschale (12) verbunden ist und in das zwei mit der Achse (37) kraftschlüssig verbundene Stifte (39 und 40) unter der Einwirkung elastischer Mittel (41) eingreifen.

**Claims**

1. Motor vehicle seat comprising a chassis (1) mounted sliding longitudinally in relation to the vehicle structure and supporting a drop-forged or moulded plastic boat (9), characterized in that the boat is mounted tilting in relation to the chassis (1) around a horizontal spindle (13a, 13b) from which it can be detached and includes a seat body frame (12) mounted pivoting at one of its extremities (12a) in relation to the boat, and characterized also in that it is provided with means (Figure 4) for immobilizing in the position desired firstly the boat (9) in relation to the chassis (1) and secondly the seat body frame (12) in relation to the boat (9).

2. Vehicle seat according to claim 1, characterized in that the boat bears two coaxial pivots (13a and 13b) engaged inside the bearings of the chassis and which are open at one part of their periphery so as to enable the pivots to be freed from the bearings.

3. Vehicle seat according to claim 1 or 2, characterized in that the chassis (1) includes a pivoting mounted spindle (15), a control lever (19) outside the boat being secured to one of its extremities and which is integral with a lever (14) bearing a pion (20) inserted between two ratchet levers or levers (23 and 24) mounted and pivoting freely on the said spindle (15), one of these ratchet levers or levers being connected to a locking sliding bolt (26) adapted to maintain the tilting axis of the boat, whilst the other lever or ratchet lever bears a carrier (28) adapted to be engaged inside a toothed sector (29) of the boat so as to block its tilting, elastic means (30) acting on these levers and tending to keep them in positions in which the boat is interdependent with the chassis via its tilting axis and is prevented from tilting in relation to this chassis.

4. Vehicle seat according to claim 3, characterized in that the elastic means consist of a spring connecting the locking sliding bolt (26) to the lever (24) bearing the carrier (28).

5. Vehicle seat according to claim 3 or 4, characterized in that it includes two identical tilting and locking mechanisms each disposed on one side of the seat and housed inside the hollow flanks of the boat, the spindle (15) being common to both mechanisms.

6. Vehicle seat according to any of the preceding claims, characterized in that the seat body frame (12) has at one of its extremities a folded edge (12a) engaged with clearance inside a back aperture (33) of the boat.

7. Vehicle seat according to any of the preceding claims, characterized in that the means to immobilize the seat body frame in relation to the boat consist of two mechanisms each disposed on each side of the seat and controlled by a given spindle (37) bearing a roller wheel (38) and longitudinally mobile in two oblong bearings (36) of the boat, each of these mechanisms comprising a toothed sector (34) integral with the seat body frame (12) and in which two pions (39 and 40) integral with the spindle (37) are engaged via elastic means (41).

FIG.1

FIG.2

FIG.3

0 192 006

## FIG. 4

FIG.5

FIG.6

0 192 006